# EUROPEAN PATENT APPLICATION

(11) **EP 1 691 520 A1**
(43) Date of publication of application: **16.08.2006**
(21) Application number: 04762288.1
(22) Date of filing: 13.10.2004
(51) Int. Cl.: H04L 29/06

(54) **A METHOD FOR TRANSMITTING MULTI-PROTOCOL LABEL SWITCH PROTOCOL DATA UNIT**

(30) Priority: 03.12.2003 CN 200310120736
(71) Applicant: Huawei Technologies Co., Ltd., Longgang District, Shenzhen, Guangdong 518129 (CN)
(72) Inventor: JIANG, Zhangzhen, Shenzhen, Guangdong 518129 (CN); HE, Jianfei, Shenzhen, Guangdong 518129 (CN); ZHU, Jianyun, Shenzhen, Guangdong 518129 (CN)
(74) Representative: Dilg, Andreas
(86) International application number: PCT/CN2004/001164
(87) International publication number: WO 2005/055547

(57) **Abstract**

The invention relates to a method for transmitting High-level Protocol data unit based on Low-level Protocol. It discloses a method for transmitting Multi-Protocol Label Switch protocol data unit, which can enhance the transmission efficiency, resource utilization, and network performance of the service in MPLS networks. The method for transmitting Multi-Protocol Label Switch protocol data unit includes the following steps: A, filling the Multi-Protocol Label Switch protocol data unit to payload information area field of the General Framing Procedure data frame; B, transmitting the General Framing Procedure data frame to the destination node through the transmission network; C, extracting the Multi-Protocol Label Switch protocol data unit from the payload information Area field of the General Framing Procedure data frame at the destination node (Fig.3 (b)).

## Description

### FIELD OF THE INVENTION

The present invention relates to a method for transmitting a high-level protocol data unit based on a low-level protocol, and more particularly, to a method for transmitting a Multi-Protocol Label Switch Protocol data unit based on the General Framing Procedure.

### BACKGROUND OF THE INVENTION

The Multi-Protocol Label Switch (MPLS) is a standard protocol of Internet Engineering Task Force (IETF). The MPLS is a label-based Internet Protocol (IP) routing method, which belongs to the third layer switch technique, where a label based mechanism is introduced to separate routing and forwarding, a path by which a packet goes through the network is specified by a label, and data transmission is implemented through a Label Switch Path (LSP), which switches a package exchange originally at the third layer to that at the second layer in the IP network.

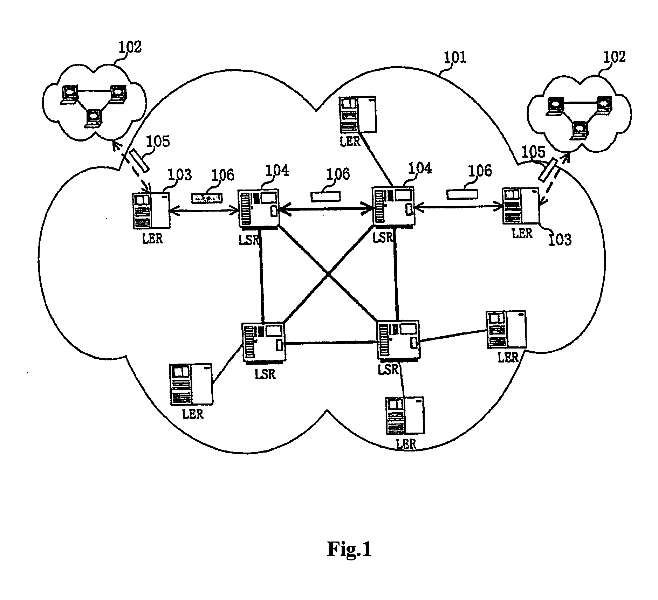

Fig. 1 shows the structure of a MPLS network. The MPLS network 101 consists of a Label Switch Router (LSR) 104 at a core part and a Label Edge Router (LER) 103 at an edge part. Here, the LER 103 is used to analyze an IP header, to perform network functions of the third layer, and to decide a corresponding transmission level and a LSP, and the LER 103 is connected with an external network 102 from which to receive an external packet switch data package 105. The LSR 104 is used to establish a LSP, to execute a label switch mechanism and guarantee Quality of Service (QoS), and to forward a packet data package 106 internal of the MPLS network 101, and the LSR 104 consists of a control unit and a switch unit, is located within the network and is connected with the LER 103 and other LSRs 104.

The work flow of the MPLS label switch is as the following. A routing table and a label mapping table are initially established in a LSR through the Label Distribution Protocol (LDP) and a conventional routing protocol, such as Open Shortest Path First (OSPF) etc. During the network operation, an IP package is first received from an external network through a LER at an entry of the MPLS core network, where network functions of the third layer is performed and the IP package is labeled; next, the data package is transmitted in a LSR, and the LSR performs no the third-layer processing on the packet, but forwards the package through the switch unit based on the label of the packet, which finally reaches a LER at the other end, that is, an exit of the network. In the end, the label of the package is removed and then the package is forwarded according to a corresponding external network protocol through the LER at the MPLS exit.

Since the MPLS technology isolates the label distribution mechanism from data flows, the implementation thereof has no dependence on a specific data link layer protocol and hence can support various physical layer and data link layer technologies. Currently, MPLS services have been achieved over a local area network based on Frame Relay (FR), Asynchronous Transfer Mode (ATM), and Point-to-Point Protocol (PPP) link as well as the 802.3 protocol from the Institute of Electrical and Electronics Engineers (IEEE). The use of a MPLS-technology based network for the forwarding of IP services can simplify the routing forwarding process between layers, and thus increase the MPLS switch speed and improve the network efficiency, and also facilitate the transmission of services of various levels, Therefore, the MPLS has not only the high speed and the traffic control ability of a switch but also flexible functions and the Quality-of-Service guarantee mechanism of a router.

The General Framing Procedure (GFP) is a new framing protocol described in the G.7041/Y.1303 Recommendations from the International Telecommunication Union-Telecommunication Standardization Sector (ITU-T). The GFP can be used, in a high-speed data communication channel, to transmit both length-fixed and length-varied data packages, because the GFP continues to use such a mechanism of performing a frame delimitation based on the Header Error Check (HEC) as adopted by the Asynchronous Transfer Mode (ATM). The GFP develops the point-to-point transmitting ability of a modem, arranges and transmits incoming data flows sequentially, and thus greatly simplifies the synchronization of data link layers and the delimitation operation of data frames. The GFP is rather different from a delimitation mechanism as adopted by a High-level Data Link Control (HDLC) based framing protocol that uses a header flag, an escape byte of "7D" or "7E", etc. The GFP dispenses with a specific line coding on a Protocol Data Unit (PDU), resulting in a reduced requirement on a logic circuit processing the PDU. The GFP can provide a Quality-of-Service (QoS) management function for the client layer, and thus the management overhead is reduced, which is superior to the ATM. Such a low execution complexity enables the GFP to be particularly suitable for a high-speed transmitting link, such as Optical Transport Network (OTN), Point-to-Point Protocol (PPP) link of Synchronous Digital Hierarchy (SDH)/Synchronous Optical Network (SONET), and even to be applied over a bare optical fiber. In a high-speed data transmission environment, a number of conventional solutions such as ATM, Frame Delay (FR), PPP/HDLC, PPP-over-SDH/SONET (POS) can not meet the need of the development of the network service, and thus the GFP becomes a most promising alternative.

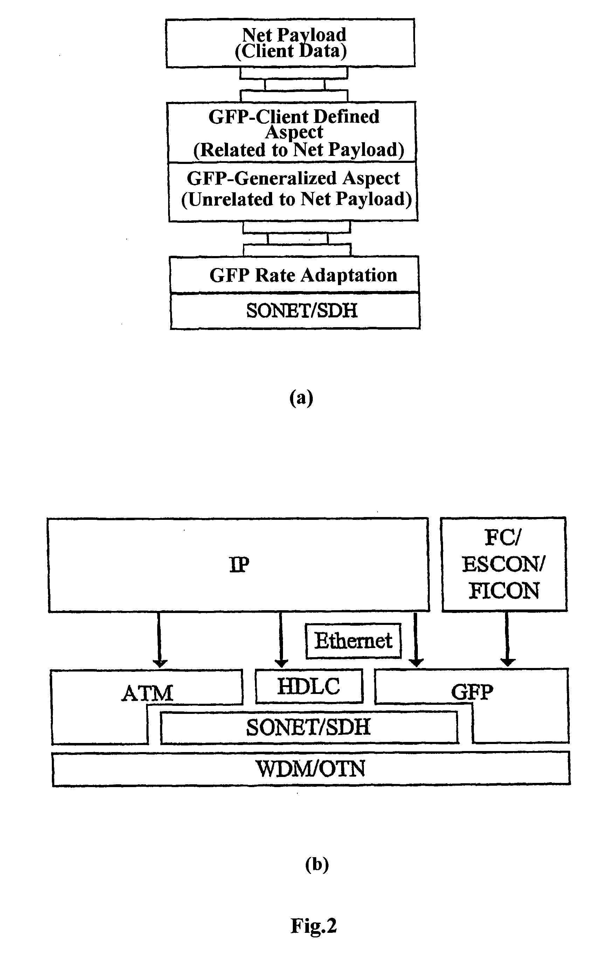

Fig.2 (a) shows relationships between the GFP and the upper and lower layers of the network, that is, the relationships between the GFP and high-level client data and between the GFP and a low-level transmission channel. The GFP is divided into two layers of which the upper layer is related to the client PDU, called a GFP client defined aspect, and used to deal with the encapsulation management of client data, and the lower layer is not related to the client PDU, called a GFP generalized aspect, and used for channel sending, receiving and controlling.

The GFP net payload overhead can implement that multiple transmission modes are performed in the same transmission channel. One mode, corresponding to Frame-Mapped GFP (GFP-F), is most suitable for a package exchange environment, where the resource management is performed by the resource original data client. This is the transmission mode used for original IP, PPP and Ethernet services. Another mode, corresponding to Transparent GFP (GFP-T), is mainly used for an application of a circuit emulation type sensitive to a time delay, for the purpose of making an efficient transmission over an adaptation layer. This is the transmission model used for Fiber Channel (FC), Enterprise Systems Connection (ESCON) and Fiber Connection (FICON) services.

At present, packet exchange services such as an IP service or the like are mainly put in the FR, PPP/HDLC, POS or ATM after being encapsulated, and then are transmitted across the Time-Division-Multiplexing (TDM) based core network. Currently, although most edge routers, particularly interfaces at the core of a metropolitan area network and a wide area network, gradually adopt STM-16/OC-48c and STM-64/OC-192c SDH/SONET interfaces, most FR and PPP interfaces still operate at the rate of DS1, DS3 or OC-3c, or transmit with an even lower rate. Ethernet and Storage Area Networking (SAN) protocols, such as FC, ESCON and FICON, are still subject to conventional solutions, that is, the transmission is performed over a public network through an exclusive provider-specific protocol. However, the GFP adopts the mechanism with QoS and based on a current standard, transmits Ethernet/SAN services through the TDM network, which meets the need of improving interconnection between a data center and the SAN and the increasing need of obtaining the QoS function based on the virtual private network of Ethernet and through the 802.1Q/P.

Following the above description, Fig.2 (b) shows the location of the GFP in the network architecture, where the network infrastructure adopts a high-data-rate fiber network as the physical media, such as Wave Division Multiplexing (WDM), OTN or the like, and then the SONET or SDH network is constructed. Conventional HDLC, ATM or GFP on SONET/SDH may be constructed over the SONET/SDH, and the ATM and the GFP may be also constructed over the transmission media. In a conventional network, the Ethernet or the like may be constructed over the HDLC in order to carry the IP service of the network layer, and the IP service may be also carried directly over the ATM (IP Over ATM or IPOA). However, the IP service and the SAN services such as FC, ESCON, FICON can be carried over the GFP through the Ethernet mode or directly.

As described above, the current network architecture adopts the method of carrying a Packet Switching Network (PSN) service such as the MPLS over the conventional data link layer such as the HDLC or the like, and therefore the existing data link layer of MPLS generally adopts HDLC/PPP, FR, ATM, Ethernet or the like, and the HDLC/PPP is generally adopted in an Optical Transport Network.

In practice, the above solutions have the following problem: data services are encapsulated through the PPP/HDLC for the transmission over the Optical Transport Network, which is rather complicated, less efficient and inflexible, and hence directly influences the performance of the MPLS network constructed thereon.

The major reason for this lies in that the conventional data link layer protocol or the encapsulation adopted by the current MPLS network can not fully meet the need of the MPLS network, and can not be adaptable to the need of the future development of network services.

### SUMMARY OF THE INVENTION

In view of the above, a main object of the present invention is to provide a method for transmitting a Multi-Protocol Label Switch protocol data unit, which can improve the transmission efficiency, resource utilization and network performance of services in a MPLS network.

In order to attain the above object, the present invention provides a method for transmitting a Multi-Protocol Label Switch protocol data unit, comprising the steps of:

A. filling the Multi-Protocol Label Switch protocol data unit to be transmitted in a Payload Information Area field of a General Framing Procedure data frame;

B. transmitting the General Framing Procedure data frame to a destination node over a transmission network; and

C. extracting the Multi-Protocol Label Switch protocol data unit from the Payload Information Area field of the General Framing Procedure data frame at the destination node.

Optionally, the step A may further comprise the step of:

setting a value of a User Payload Identifier field of the General Framing Procedure data frame as a predetermined value indicating the present frame carries a Multi-Protocol Label Switch protocol data unit.

Optionally, the predetermined value indicating the present frame carries a Multi-Protocol Label Switch protocol data unit may be the hexadecimal Ox07.

Optionally, the step C may further comprise the step of:

removing a Core Header of the General Framing Procedure data frame, and extracting the net payload of the General Framing Procedure data frame as the Multi-Protocol Label Switch protocol data unit.

Optionally, the method may further comprise the steps of: coding or compressing the Multi-Protocol Label Switch protocol data unit before filling the Multi-Protocol Label Switch protocol data unit in the Payload Information Area field; and

decoding or decompressing the Multi-Protocol Label Switch protocol data unit after extracting the Multi-Protocol Label Switch protocol data unit from the Payload Information Area field.

It can be seen comparatively that the present invention differs from the prior art in that the GFP frame format is used to encapsulate the MPLS protocol data unit, the UPI value of the GFP frame is defined for indicating what the frame carries is a MPLS protocol data unit, and the frame is transmitted over the Optical Transport Network.

These differences in technical solutions bring obvious beneficial effects, that is, the use of the GFP for encapsulating the MPLS protocol data unit can reduce the encapsulation overhead and the encapsulation time delay, increase the network throughput, improve the QoS compatibility, lower the complexity of implementation and operation, and improve the performance and Quality-of-Service of the MPLS network.

### BRIEF DESCRIPTIONS OF THE DRAWINGS

Fig. 1 is a schematic diagram of the architecture of a MPLS network;

Fig. 2 is a schematic diagram showing the relationship between a GFP and the upper and lower layers of the network, and the location of the GFP in the network architecture; and

Fig. 3 is a schematic diagram of a GFP frame format used in encapsulating a MPLS protocol data unit in accordance with an embodiment of the present invention.

### DETAILED DESCRIPTIONS OF THE EMBODIMENTS

The embodiments of the present invention will be further described hereinafter with reference to the accompanying drawings so as to make the purposes, solutions and advantages of the invention more apparent.

In accordance with an embodiment of the present invention, a MPLS protocol data unit is encapsulated through a GFP protocol and is transmitted over a physical network, thus achieving the MPLS network service function. In this way, the MPLS network incorporates with the advantages of the GFP, such as being simple, efficient and flexible, and thereby the performance of the MPLS network is greatly improved.

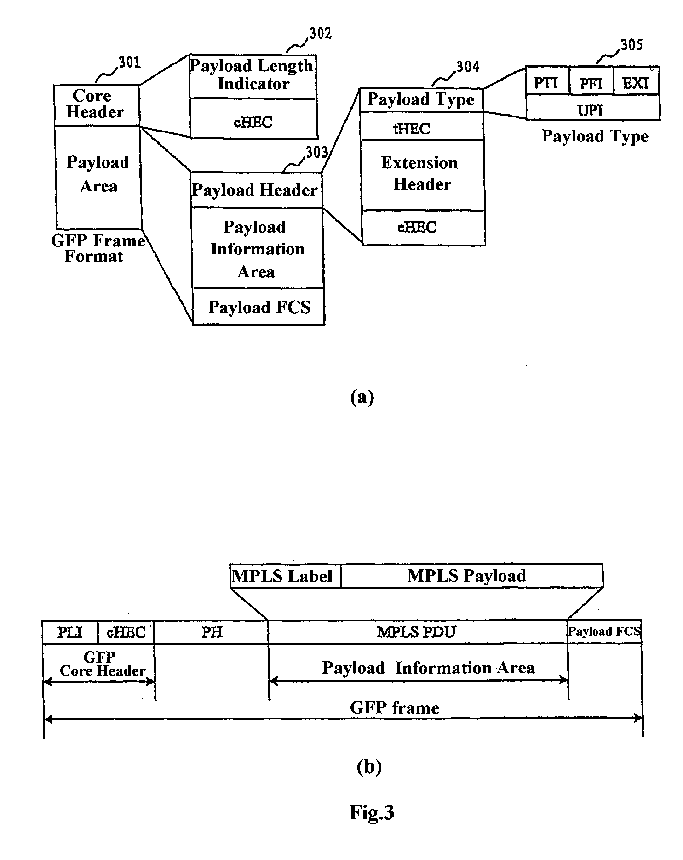

First, an embodiment of the present invention provides a frame format that uses the GFP protocol to encapsulate the MPLS protocol data unit. Fig. 3 shows the GFP frame format used in encapsulate the MPLS protocol data unit according to the embodiment of the present invention.

As shown in Fig. 3 (a), the GFP frame 301 includes two parts, i.e., a Core header 302 and a Payload area 303 according to the transmission sequence. The Core header 302 has a length of 32 bits, and is used to describe the GFP frame independently without dependence on the content of a high-level protocol data unit, and the Payload area 303 may have a length from 4 to 65535 bytes, and be used to carry the high-level protocol data unit and relevant information.

Specifically, the Core header 302 further includes two areas, i.e., a Payload Length Indicator (PLI) and a Core Header Error Check (cHEC) according to the transmission sequence. The PLI has a length of 16 bits, and is used to indicate the number of bytes of the Payload area 303, and the cHEC has a length of 16 bits, and is used to check the data integrity of the Core header 302 by using the 16-bit Cyclic Redundancy Check (CRC) method.

The Payload area 303 further includes three parts, i.e., a Payload Header (PH) 304, a Payload Information Area and a Payload Frame-Check Sequence (FCS) according to the transmission sequence. The Payload Header 304 may have a length of 4 to 64 bytes, and be used to support a data link management procedure of the high-level client data. The Payload Information Area and the Payload FCS have a total length of no more than 65536 bytes, wherein the Payload Information Area is the encapsulated high-level client data, and the Payload FCS is optional, has a length of 4 bytes and is used to perform a 32-bit CRC check on the Payload Information Area.

The Payload Header 304 further includes a Payload Type 305, a Type HEC (tHEC), an Extension Header and an Extension HEC (eHEC) according to the transmission sequence. The Payload Type 305 has a length of 16 bits, and is used to indicate the content and the format of the Payload Information Area of the GFP frame; the tHEC has a length of 16 bits, and is used to check the data integrality of the Payload Type 305 in such a way to achieve the functions of a single-bit error correction and a double-bit error detection; the Extension Header is optional, has a length from 0 to 60 bytes, and is used to support the header information of a data link technical specification, such as a virtual connection identifier, a source/destination address, a port number, a service level or the like; and the eHEC is optional alike, that is, a code of a 16-bit CRC check for the Extension Header.

The Payload Type 305 has four parts, i.e., a Payload Type Identifier (PTI), a Payload FCS Indicator (PFI), an Extension Header Identifier (EXI) and a User Payload Identifier (UPI) according to the transmission sequence. Here, the 3-bit PTI is used to identify the type of a GFP client frame, and the type is a client data frame when the PTI takes the binary "000" and is a client management frame when the PTI takes the binary "100". The 1-bit PFI indicates if the Payload FCS exists. The 4-bit EXI identifies the type of the extension header in the Extension Header. The 8-bit UPI is used to indicate the type of the payload carried in the Payload Information Area of the GFP frame. When the PTI takes the binary "000", that is, when what being transmitted is a client data frame, the payload types are defined as following: Ethernet in a frame-mapped mode, PPP in a frame-mapped mode, FC in a transparent mode, FICON in a transparent mode, ESCON in a transparent mode, Giga Ethernet in a transparent mode and Multiple Access Protocol over SDH (MAPOS) in a frame-mapped mode. Here, the following values (hexadecimal) are reserved in the space of values by the UPI: 0x00 and 0xFF not available, 0x07 reserved for the future, 0x09 to 0xEF reserved for a future standardization, and 0xF0 to 0xFE reserved for intellectual properties.

A method for encapsulating the MPLS protocol data unit in the GFP as described above will be described in details below according to an embodiment of the invention with reference to Fig.3 (b). The MPLS protocol data unit is filled directly as the Payload Information Area in the GFP data frame. The GFP frame for encapsulating the MPLS protocol data unit includes the following parts according to the transmission sequence: the Payload Length Indicator, the Core Header Error Check, the Payload Header, the Payload Information Area, i.e., the MPLS protocol data unit, and the Payload FCS. Here, the MPLS protocol data unit includes the two parts, i.e., the MPLS label and the MPLS payload according to the transmission sequence. The GFP frame encapsulated in this way can carry the MPLS protocol data unit. The MPLS protocol data unit can also be filled in the GFP frame in various ways. For example, it is also possible here to achieve the encapsulation of the MPLS protocol data unit by the GFP frame through filling after coding and compressing the MPLS protocol data unit.

According to an embodiment of the invention, the UPI of the GFP frame for encapsulating the MPLS protocol data unit is defined as the value of 0x07 indicating what the frame carries is a MPLS protocol data unit. It will be recognized for those skilled in the art that it is also possible here to define the UPI value of the GFP frame as any applicable value indicating what the GFP frame carries is a MPLS protocol data unit.

In an embodiment of the invention, a method for transmitting a MPLS service over an Optical Transport Network includes the following steps.

First, MPLS protocol data unit bytes to be transmitted are encapsulated in a GFP frame, for example, through filling the MPLS protocol data unit in a Payload Information Area of the GFP frame and assigning values to other fields of the GFP frame.

Next, a UPI field of the GFP frame is defined as a predetermined value indicating what the frame carries is a MPLS protocol data unit, where the predetermined value may take 0x07 or another applicable value.

Then, the encapsulated GFP frame is transmitted to a destination node over the Optical Transport Network. During the transmission of the LAPS frame, each intermediate node can identify what the frame carries is the MPLS protocol data unit in accordance with the defined value of the UPI field, facilitating a proper processing.

Finally, the MPLS protocol data unit is extracted from the information field of the LAPS frame at the destination node. Here, a de-capsulation process is involved which is an inverse process of the above encapsulation process, removing the GFP Core Header and extracting the net payload. It shall be noted that the previous MPLS only defines two link layer technologies for carrying the MPLS: the Ethernet MAC and the PPP Protocol. Here, the GFP is proposed as a new alternative, which can make the MPLS being transmitted efficiently over the SDH/SONET.

While the present invention has been illustrated and described with reference to some presently-preferred embodiments of the present invention, those skilled in the art shall appreciate that various changes, variations, modifications, alterations, substitutions or the like in any aspect can be made without departing from the scope of the present invention as defined by the accompanied claims.

## Claims

1. A method for transmitting a Multi-Protocol Label Switch protocol data unit, comprising the steps of:
A. filling the Multi-Protocol Label Switch protocol data unit to be transmitted in a Payload Information Area field of a General Framing Procedure data frame;
B. transmitting the General Framing Procedure data frame to a destination node over a transmission network; and
C. extracting the Multi-Protocol Label Switch protocol data unit from the Payload Information Area field of the General Framing Procedure data frame at the destination node.

2. The method for transmitting a Multi-Protocol Label Switch protocol data unit according to Claim 1, wherein the step A further comprises the step of:
setting a value of a User Payload Identifier field of the General Framing Procedure data frame as a predetermined value indicating the present frame carries a Multi-Protocol Label Switch protocol data unit.

3. The method for transmitting a Multi-Protocol Label Switch protocol data unit according to Claim 2, wherein the predetermined value indicating the present frame carries a Multi-Protocol Label Switch protocol data unit is the hexadecimal 0x07.

4. The method for transmitting a Multi-Protocol Label Switch protocol data unit according to Claim 1, wherein the step C further comprises the step of:
removing a Core Header of the General Framing Procedure data frame, and extracting the net payload of the General Framing Procedure data frame as the Multi-Protocol Label Switch protocol data unit.

5. The method for transmitting a Multi-Protocol Label Switch protocol data unit according to Claim 1, wherein the method further comprises the steps of:
coding or compressing the Multi-Protocol Label Switch protocol data unit before filling the Multi-Protocol Label Switch protocol data unit in the Payload Information Area field; and
decoding or decompressing the Multi-Protocol Label Switch protocol data unit after extracting the Multi-Protocol Label Switch protocol data unit from the Payload Information Area field.

6. The method for transmitting a Multi-Protocol Label Switch protocol data unit according to Claim 1, wherein the General Framing Procedure is as defined in G.7041/Y.1303 Recommendation from the International Telecommunication Union-Telecommunication Standardization Sector.

7. The method for transmitting a Multi-Protocol Label Switch protocol data unit according to Claim 1, wherein the transmission network is an Optical Transport Network.
